Europäisches Patentamt

European Patent Office

Office européen des brevets

(11) Veröffentlichungsnummer : **0 129 905**
**B1**

(12) **EUROPÄISCHE PATENTSCHRIFT**

(45) Veröffentlichungstag der Patentschrift :
11.11.87

(21) Anmeldenummer : 84107284.6

(22) Anmeldetag : 25.06.84

(51) Int. Cl.⁴ : **B 01 J 20/32**

(54) **Poröse synthetische Sorbentien mit biokompatibler Oberfläche und ihre Herstellung.**

(30) Priorität : 23.06.83 CS 4619/83

(43) Veröffentlichungstag der Anmeldung :
02.01.85 Patentblatt 85/01

(45) Bekanntmachung des Hinweises auf die Patenterteilung : 11.11.87 Patentblatt 87/46

(84) Benannte Vertragsstaaten :
AT BE CH DE FR GB IT LI NL SE

(56) Entgegenhaltungen :
GB-A- 932 126
US-A- 3 427 370
US-A- 4 171 283
US-A- 4 408 040
CHEMICAL ABSTRACTS, Band 100, Nr. 10, März 1984,
Seite 356, Nr. 74013m, Columbus, Ohio, US

(73) Patentinhaber : Ceskoslovenska akademie ved
Narodni trida 3
Praha 1 (CS)

(72) Erfinder : Tlustakova, Marie CSc
Kozominska 637
Praha 8 (CS)
Erfinder : Horak, Jiri MUDR CSc
Podolska 1485
Praha 4 (CS)
Erfinder : Vavrouch, Josef, Dipl.-Ing.
Hlavni 383
Libice n.C (CS)
Erfinder : Kulisek, Jiri
Druzstevni 436
Zasmukyr (CS)
Erfinder : Kalal, Jaroslav, Prof.Ing. DrSc
Belohorska 135
Praha 6 (CS)

(74) Vertreter : Patentanwälte Beetz sen. - Beetz jun.
Timpe - Siegfried - Schmitt-Fumian
Steinsdorfstrasse 10
D-8000 München 22 (DE)

**Beschreibung**

In der inneren Medizin ist es bei einer Reihe von Fällen erforderlich, aus dem Plasma bzw. dem Blut von Patienten toxische Stoffe exo- oder endogenen Ursprungs zu beseitigen. Hierzu eignet sich die Hämoperfusion als eine sehr einfache Methode, bei der das Blut das Patienten über ein geeignet ausgewähltes Sorbensmaterial geleitet wird.

Zur Zeit werden Kolonnen für die klinische Hämoperfusion von mehreren Firmen hergestellt. Die handelsüblichen Kolonnen unterscheiden sich zwar in ihrer Form sowie durch die Art der hämokompatiblen Schutzschicht voneinander, jedoch bildet in allen Fällen Aktivkohle das Sorbens. Als hämokompatible Schichten werden bisher polymere Beschichtungen auf der Basis von Poly(2-hydroxyethylmethacrylat) (Hydrontyp) (Fa. Sandev für Kolonne Haemocol, Fa. Kuraray für Kolonne DHP-1) oder Cellulose oder ihre Derivate (Fa. Gambro für Kolonne Adsorba 300 C oder 150 C) verwendet.

In jüngster Zeit werden ferner besonders für experimentelle Zwecke mit synthetischen Sorbentien gefüllte Kolonnen, allerdings ohne hämokompatible Schutzschicht, verwendet, wobei insbesondere nichtionogene Gele auf der Basis von Copolymerisaten von Styrol und Divinylbenzol (Amberlite XAD-2, XAD-4) bzw. von Copolymerisaten von Acryl- oder Methacrylsäure mit Divinylbenzol (Amberlite XAD-7) Anwendung finden. Beim Überleiten von Blut über diese Sorbentien werden jedoch bis zu 90 % der Blutplättchen und mehr als 70 % der Leukocyten auf ihrer Oberfläche festgehalten (Rosenbaum J. L., Kramer M. S., Raja R., Winsten S., Dalai F., Kidney Intern. 10 (1976) 341 ; Willson R. A., Hofmann A. F., Kuster G. G. R. : Gastroenterology 66 (1974) 95). Einige Autoren beobachteten sogar eine Druckerhöhung in der Kolonne und die Entstehung von Blutniederschlägen (Cooney D. O., Infantolino W., Kane R. : Biomat. Med. Dev. Art. Org. 1979, 443). Es ist also offensichtlich, daß bei einer so beträchtlichen Abnahme von Blutbestandteilen, die der Organismus ausgleichen muß, eine Therapie chronischer Zustände durch wiederholte Perfusionen unmöglich ist, und ferner, daß bei akuten Perfusionen ein ziemlich großes Risiko hämorrhagischer Komplikationen besteht. Deshalb wurde in letzter Zeit versucht, diese Sorbentien z. B. mit Albumin (Hughes R., Ton H. Y., Langley P., Davies M., Hanid A., Mellon O., Silk D. B. A., Williams R. ; Artif. Organs 3 (1979) 23) oder mit Celluloseacetat oder synthetischen Polyelektrolyten (de Koning H. W. M., Chamuleau R. A. F. M., Seredel L. C., Bantjes A. ; Artif. Liver Support, Proc. Int. Symp. 82, 1980) behandeln. Durch diese Behandlung der Oberfläche des Adsorptionsmaterials wird seine Blutverträglichkeit verbessert. Bisher konnte jedoch die sehr gute Hämokompatibilität von Beschichtungen auf der Basis von Poly(2-hydroxyethylmethacrylat) nicht ausgenutzt werden, da diese Schichten nicht auf dieselbe Weise wie bei Aktivkohle unter Beibehaltung ihrer vollen Sorptionsfähigkeit — wegen der Hydrophobie des Harzes — hergestellt werden konnten. Durch Überziehen des trockenen Gels würde nämlich für die Sorption lediglich die äußere Oberfläche der Teilchen ausgenutzt.

Einen Fortschritt beim Überziehen von polymeren Sorbentien mit einer hämokompatiblen polymeren Schicht stellt das Verfahren nach dem ČS-Urheberschein 217 253 dar, das in der Füllung der Sorbensporen durch andere Lösungsmittel und ihrem nachfolgenden Austausch gegen Wasser im bereits oberflächlich modifizierten Sorbens besteht.

Dieses Verfahren ist zeitraubend und gegenüber der hämokompatiblen Schicht nicht schonend ; überdies können mit den Lösungsmitteln bakterielle Verunreinigungen in die Sorbensporen eingeschleppt werden. Diese bleiben dann nach Überziehen der Sorbensteilchen mit der biokompatiblen polymeren Schicht in den Poren eingeschlossen, wo sie wiederum Stoffe produzieren können, die durch ihren Einfluß auf das Blut des Patienten beträchtliche Komplikationen bei Hämoperfusionen verursachen.

Die erfindungsgemäßen biokompatiblen Sorbentien weisen diese Nachteile nicht auf. Das Verfahren zur Herstellung biokompatibler Schichten auf der Oberfläche von Teilchen poröser synthetischer Sorbentien gemäß der Erfindung ist dadurch gekennzeichnet, daß man eine durch Einleiten von Wasserdampf gerührte Suspension des Sorbens mit einer Lösung eines biokompatiblem Polymerisats vom Acrylat- oder Methacrylattyp oder eines entsprechenden Monomers in Gegenwart eines Polymerisationsinitiators versetzt.

Als Sorbentien werden vorteilhaft Copolymerisate von Styrol und Divinylbenzol (Amberlite XAD-2 bzw XAD-4, Synachrom E 5 udgl), Copolymerisate von Estern von Acryl- oder Methacrylsäure mit Divinylbenzol (Amberlite XAD-7 bzw XAD-8) sowie ferner Copolymerisate von Styrol und Ethylendimethacrylat (Separone SE) verwendet. Eine geeignete Teilchengröße sowie eine geeignete Vernetzungsdichte des Polymernetzwerks sind bevorzugt, da geringvernetzte Gele bei erhöhten Temperaturen teilweise depolymerisieren können. Vorteilhaft werden Sorbentien mit einer Teilchengröße von 0,2 bis 3 mm verwendet.

Die Menge des Polymerisats, das die Beschichtung der Sorbensteilchen bildet, hängt von ihrer Teilchengröße ab. Das hydrophile biokompatible Polymerisat muß auf der Geloberfläche in seiner solchen Menge vorliegen, daß eine dünne, jedoch vollkommen zusammenhängende. Schicht entsteht.

Als Lösungsmittel für das biokompatible Polymerisat werden Ethanol oder Methanol oder deren Gemische mit Wasser oder wäßrigen Salzlösungen verwendet.

Zur Suspendierung der Sorbenspartikel bei der Herstellung der biokompatiblen Schicht werden wäßrige Medien, d. h. Wasser oder wäßrige Salzlösungen verwendet. Die Menge der flüssigen Komponente kann nicht genau angegeben werden, da sie sich im Verlauf der Reinigung des Sorbens und bei der Herstellung der polymeren Schicht ändert. Der Wasserdampf, der in die Suspension eingeleitet wird, kondensiert zunächst und erhöht so den Anteil der flüssigen Komponente. Die Zunahme des Flüssigkeitsgehalts der Suspension hängt beispielsweise von der Temperatur der eingesetzten Suspension, der Temperatur des eingeleiteten Dampfs, der Abkühlung der Suspension durch die Umgebungsbedingungen usw ab. Die Menge der Flüssigkeit in der ursprünglichen Suspension hängt ferner auch von der Teilchengröße der festen Suspensionskomponente ab. Eine genaue Bestimmung des Gehalts an flüssigem Medium in der Suspension ist demgemäß nicht von Bedeutung, zumal die Sorbenspartikel nicht monodispers sind. Wichtig ist jedoch, daß die Suspension durch den eingeleiteten Dampf gründlich gerührt bzw durchgemischt wird.

Das biokompatible Polymerisat stellt günstigerweise entweder ein Homopolymerisat von 2-Hydroxyethylmethacrylat oder ein entsprechendes Copolymer mit einem Vernetzungsmittel, vorteilhaft mit Ethylendimethacrylat, dar. Bei Verwendung einer Lösung von vernetztem Poly(2-hydroxyethylmethacrylat) ist die Menge des Vernetzungsmittels, vorteilhaft Ethylendimethacrylat, durch die Forderung der Löslichkeit des Copolymers beschränkt. Der Gehalt an Vernetzungsmittel im resultierenden Copolymer ist jedoch frei wählbar, da die biokompatible Schicht auch direkt auf den Sorbensteilchen durch Polymerisation von Monomeren hergestellt werden kann. Als Monomer wird in diesem Fall vorzugsweise 2-Hydroxyethylmethacrylat, gegebenenfalls in Gegenwart von Ethylendimethacrylat, eingesetzt.

Als Polymerisationsinitiatoren werden wasserlösliche Initiatoren der radikalischen Polymerisation, z. B. wasserlösliche Peroxoverbindungen, verwendet.

Die Vorteile des erfindungsgemäßen Verfahrens zur Herstellung einer biokompatiblen und insbesondere hämokompatiblen Schicht auf der Oberfläche von Sorbentien mit Hilfe von Wasserdampf besteht darin, daß er nicht nur gegenüber dem ursprünglichen unbeschichteten Sorbens, sondern auch gegenüber der gebildeten Polymerschicht inert ist. Der in die Suspension des Sorbens in Wasser oder beispielsweise isotonischer Natriumchloridlösung eingeblasene Wasserdampf gewährleistet eine sehr wirksame Rührung bzw. Durchmischung und gleichzeitige Erhitzung der Suspension, wobei es gleichzeitig weder bei der hämokompatiblen Schicht noch beim ursprünglichen Sorbens zu Abrieberscheinungen kommt. Das Sorbens wird ferner hierdurch auch von den letzten Resten insbesondere aromatischer Monomerer gereinigt, die zusammen mit dem Wasserdampf flüchtig sind. Bei der Herstellung der biokompatiblen Schicht werden Methanol oder Ethanol als Komponenten der Lösung beispielsweise von Poly(2-hydroxyethylmethacrylat) sehr rasch durch Wasserdampfdestillation entfernt. Die hämokompatible Schicht entsteht hierbei sehr rasch und ist zugleich dünn, so daß sie die Diffusion der Toxine beim praktischen Einsatz nur minimal verlangsamt.

Durch das erfindungsgemäße Verfahren sind Sorbentien zugänglich, deren Oberfläche biokompatibel ist, wobei ihr Sorptionsvermögen im Vergleich zu nichtbeschichteten entsprechenden Sorbentien voll erhalten bleibt. In den Poren der Sorbentien ist nämlich Wasser eingeschlossen, was eine Sorption von Toxinen auch im Inneren der Gelteilchen ermöglicht. Der Wasserdampf kann im übrigen völlig apyrogen hergestellt werden, wodurch wiederum gewährleistet werden kann, daß das Sorbens im Inneren eine entsprechende Reinheit besitzt.

Die Intensität des Rührens bzw. der Durchmischung kann in sehr einfacher Weise über den Überdruck des eingeleiteten Wasserdampfs sowie etwa durch Art und Form der Einleitungsvorrichtungen eingestellt oder geregelt werden ; zur Einleitung können beispielsweise einfache Rohre oder Röhrchen, Röhrenkreuze, ovale oder ringförmige Einleitungsvorrichtungen mit zahlreichen Löchern oder etwa Sintermaterialien oder Glasfritten verwendet werden.

Zur klinischen Erprobung wurden entsprechende Sorbentien in Kolonnen aus Polypropylen eingebracht, die aus zwei identischen Hälften aufgebaut waren, die ihrerseits aus drei aufeinandergesetzten kegelstumpfförmigen Teilen bestanden. Das oberflächlich beschichtete Sorbens wurde zwischen zwei Stützwänden untergebracht, die gleichzeitig als Siebe dienten. Der Kolonneninhalt betrug 850 bzw. 420 ml. Die Kolonnenenden waren mit trichterförmigen Ansätzen versehen, auf deren Tüllen Schläuche zur Durchleitung von Blut angeschlossen waren.

Durch klinische Versuche wurde festgestellt, daß die erfindungsgemäßen, biokompatibel beschichteten Sorbentien eine vorzügliche Hämokompatibilität aufweisen. Der Blutdruck änderte sich während der Perfusionen um nicht mehr als 1,33 kPa (10 Torr) ; ferner wurden weder Hämolyse noch Blutniederschläge festgestellt. Bei der praktischen Anwendung kam es zu keinerlei klinischen Komplikationen, wobei die Perfusionen in sämtlichen Fällen auch subjektiv sehr gut vertragen wurden. Am Ende einer vierstündigen Perfusion betrugen die Anzahl an weißen Blutkörperchen im Mittel 67,7 $\pm$ 25,2 % und die Anzahl an Blutplättchen 103,1 $\pm$ 12,7 % des ursprünglichen Wertes (n = 10). Die Sorbensoberfläche erwies sich nach Zerlegen der Kolonne als frei von Blutniederschlägen oder angelagerten Blutbestandteilen.

Die Erfindung wird im folgenden anhand von Ausführungsbeispielen näher erläutert.

Die Menge des biokompatiblen Polymerisats wurde als Gewichtszunahme der Gelmasse nach dem Trocknen einer repräsentativen Probe bis zur Gewichtskonstanz bestimmt.

## Beispiel 1

Auf 10 kg eines vollständig gereinigten Gels aus einem Styrol-Divinylbenzol-Copolymer mit einer Teilchengröße von 0,3 bis 1 mm wurde unter Durchmischung mit einem kräftigen Wasserdampfstrom eine Lösung von 225 g Poly(2-hydroxyethylmethacrylat) in 1 500 ml eines Gemischs aus Ethanol und Wasser (1 : 1) aufgegossen. Die resultierende Suspension wurde bis zum Austreiben der letzten Ethanolreste mit Wasserdampf durchmischt. Die als Gewichtszunahme bestimmte Menge des Polymerisats auf dem Gel betrug etwa 2 %.

## Beispiel 2

2 500 g eines Styrol-Divinylbenzol-Copolymers mit einer Teilchengröße von 1,5 bis 3 mm wurden unter Durchmischung mit einem Wasserdampfstrom durch Zugabe von 25 g eines Copolymers aus 2-Hydroxyethylmethacrylat mit 0,5 % Ethylendimethacrylat in 800 ml eines Gemischs aus Methanol und Wasser (2 : 3) beschichtet. Nach der Entfernung des Methanols betrug die Gewichtszunahme des Sorbens 0,5 %.

## Beispiel 3

1 500 g eines gründlich gereinigten Divinylbenzolharzes mit einer Teilchengröße von 0,3 mm wurden unter Durchmischung mit einem kräftigen Wasserdampfstrom auf etwa 70 °C erhitzt und dann durch Zugabe einer Lösung von 60 g eines Copolymers von 2-Hydroxyethylmethacrylat mit 0,2 % Ethylendimethacrylat in 1 000 ml eines Gemischs von Ethanol und Wasser (4 : 1) oberflächenbehandelt. Die Gewichtszunahme des Sorbens betrug 3,2 %.

## Beispiel 4

Zu 500 g eines Styrol-Divinylbenzol-Copolymers mit einer Teilchengröße von 0,3 bis 2 mm wurde unter Durchmischung mit einem Wasserdampfstrom absatzweise eine Lösung aus 10 g Poly(2-hydroxyethylmethacrylat) in 150 ml Methanol zugegossen. Nach der Entfernung des Methanols betrug die Gewichtszunahme des Sorbens 1,7 %.

## Beispiel 5

Zu 1 000 g eines Kunstharzes aus einem Styrol-Acrylnitril-Divinylbenzol-Copolymers mit einer Teilchengröße von 0,2 bis 0,3 mm wurde unter Durchmischung mit einem sehr kräftigem Wasserdampfstrom absatzweise eine Lösung von 75 g Poly(2-hydroxyethylmethacrylat) in 500 ml eines Gemischs aus Ethanol und Wasser (3 : 2) zugegossen. Die Gewichtszunahme des Sorbens betrug 6,9 %.

## Beispiel 6

100 g eines Acrylnitril-Divinylbenzol-Copolymers mit einer Teilchengröße von 0,2 mm wurden unter Durchmischung mit Wasserdampf mit einer Lösung von 8 g eines Copolymers von 2-Hydroxyethylmethacrylat mit 0,3 % Ethylendimethacrylat in 750 ml eines Gemischs aus Methanol und Wasser (1 : 4) behandelt. Die Gewichtszunahme des Sorbens betrug 8,2 %.

## Beispiel 7

Zu 50 g Polystyrolgel mit einer Teilchengröße von 0,1 bis 0,5 mm wurde unter Durchmischung mit einem sehr kräftigem Wasserdampfstrom ein Gemisch aus 10 g 2-Hydroxyethylmethacrylat und wäßrigen Lösungen von Ammoniumpersulfat und Natriummetabisulfit zugegossen.

Die Gewichtszunahme des Sorbens betrug 15,2 %.

## Patentansprüche

1. Mit einer biokompatiblen Oberflächenschicht beschichtete poröse synthetische Sorbentien, erhältlich durch Umsetzung der Sorbentien in Suspension unter Durchmischung mit Wasserdampf mit einer Lösung eines biokompatiblen Polymerisats auf Acrylat- oder Methacrylatbasis oder entsprechender Monomerer in Gegenwart von Polymerisationsinitiatoren.

2. Sorbentien nach Anspruch 1, erhältlich unter Verwendung von Methanol und/oder Ethanol, gegebenenfalls im Gemisch mit Wasser oder wäßrigen Salzlösungen, als Lösungsmittel für das biokompatible Polymerisat.

3. Sorbentien nach Anspruch 1 oder 2, gekennzeichnet durch Poly(2-hydroxyethylmethacrylat) als biokompatibles Polymerisat.

4. Sorbentien nach Anspruch 1 oder 2, gekennzeichnet durch vernetztes Poly(2-hydroxyethylmethacrylat) als biokompatibles Polymerisat.

5. Sorbentien nach einem der Ansprüche 1 bis 4, erhältlich unter Verwendung von 2-Hydroxyethylmethacrylat und gegebenenfalls Ethylendimethacrylat als Monomeren.

6. Sorbentien nach einem der Ansprüche 1 bis 5, erhältlich unter Verwendung wasserlöslicher Initiatoren zur Initiierung der radikalischen Polymerisation.

7. Verfahren zur Herstellung der mit einer biokompatiblen Oberflächenschicht beschichteten porösen synthetischen Sorbentien, gekennzeichnet durch Umsetzung der Sorbentien in Suspension unter Durchmischung mit Wasserdampf mit einer Lösung eines biokompatiblen Polymerisats auf Acrylat- oder Methacrylatbasis oder entsprechender Monomerer in Gegenwart von Polymerisationsinitiatoren.

8. Verfahren nach Anspruch 7, gekennzeichnet durch Verwendung von Methanol und/oder Ethanol, gegebenenfalls im Gemisch mit Wasser oder wäßrigen Salzlösungen, als Lösungsmittel für das biokompatible Polymerisat.

9. Verfahren nach Anspruch 7 oder 8, gekennzeichnet durch Herstellung oder Verwendung von Poly(2-hydroxyethylmethacrylat) als biokompatibles Polymerisat.

10. Verfahren nach Anspruch 7 oder 8, gekennzeichnet durch Herstellung oder Verwendung von vernetztem Poly(2-hydroxyethylmethacrylat) als biokompatibles Polymerisat.

11. Verfahren nach einem der Ansprüche 7 bis 10, gekennzeichnet durch Verwendung von 2-Hydroxyethylmethacrylat und gegebenenfalls Ethylendimethacrylat als Monomeren.

12. Verfahren nach einem der Ansprüche 7 bis 11, gekennzeichnet durch Verwendung von wasserlöslichen Initiatoren zur Initiierung der radikalischen Polymerisation.

## Claims

1. Porous synthetic sorbents coated with a biocompatible surface layer, obtainable by reacting, while mixing with water vapour, the sorbents in suspension with a solution of a biocompatible polymerizate on acrylate or methacrylate basis or corresponding monomers in the presence of polymerization initiators.

2. Sorbents according to claim 1, obtainable with use of methanol and/or ethanol, optionally in admixture with water or aqueous salt solutions, as solvents for the biocompatible polymerizate.

3. Sorbents according to claim 1 or 2, characterized by poly(2-hydroxyethylmethacrylate) as biocompatible polymerizate.

4. Sorbents according to claim 1 or 2, characterized by cross-linked poly(2-hydroxyethylmethacrylate) as biocompatible polymerizate.

5. Sorbents according to one of claims 1 to 4, obtainable with use of 2-hydroxyethylmethacrylate and optionally ethylenedimethacrylate as monomers.

6. Sorbents according to one of claims 1 to 5, obtainable with use of water-soluble initiators for initiating the radical polymerization.

7. A process of producing the porous synthetic sorbents coated with a biocompatible surface layer, characterized by reacting, while mixing with water vapour, the sorbents in suspension with a solution of a biocompatible polymerizate on acrylate or methacrylate basis or corresponding monomers in the presence of polymerization initiators.

8. The process according to claim 7, characterized by the use of methanol and/or ethanol, optionally in admixture with water or aqueous salt solutions, as solvents for the biocompatible polymerizate.

9. The process according to Claim 7 or 8, characterized by production or use of poly(2-hydroxyethylmethacrylate) as biocompatible polymerizate.

10. The process according to claim 7 or 8, characterized by production or use of cross-linked poly(2-hydroxyethylmethacrylate) as biocompatible polymerizate.

11. The process according to one of claims 7 to 10, characterized by the use of 2-hydroxyethylmethacrylate and optionally ethylenedimethacrylate as monomers.

12. The process according to one of claims 7 to 11, characterized by the use of water-soluble initiators for initiating the radical polymerization.

## Revendications

1. Sorbants synthétiques poreux à surface biocompatible, pouvant être obtenus par réaction, en mélangeant avec de la vapeur d'eau, des sorbants en suspension avec une solution d'un polymère biocompatible à base d'acrylate ou de méthacrylate ou de monomères correspondants en présence d'initiateurs de polymérisation.

2. Sorbants selon la revendication 1, pouvant être obtenus en employant du méthanol et/ou de l'éthanol, éventuellement mélangés à de l'eau ou à une solution aqueuse d'un sel, comme solvants pour le polymère biocompatible.

3. Sorbants selon les revendications 1 ou 2, caractérisés par du poly(2-hydroxyéthyleméthacrylate) comme polymère biocompatible.

4. Sorbants selon les revendications 1 ou 2, caractérisés par du poly(2-hydroxyéthyleméthacrylate) réticulé comme polymère biocompatible.

5. Sorbants selon une des revendications 1 à 4, pouvant être obtenus en employant du 2-hydroxyéthyleméthacrylate et éventuellement de l'éthylènediméthacrylate comme monomères.

6. Sorbants selon une des revendications 1 à 5, pouvant être obtenus en employant des initiateurs solubles dans l'eau pour initier la polymérisation radicale.

7. Procédé de préparation des sorbants synthétiques poreux à surface biocompatible, caractérisé par réaction, en mélangeant avec de la vapeur d'eau, des sorbants en suspension avec une solution d'un polymère biocompatible à base d'acrylate ou de méthacrylate ou de monomères correspondants en présence d'initiateurs de polymérisation.

8. Procédé selon la revendication 7, caractérisé par l'emploi du méthanol et/ou de l'éthanol, éventuellement mélangés à de l'eau ou à une solution aqueuse d'un sel, comme solvants pour le polymère biocompatible.

9. Procédé selon la revendication 7 ou 8, caractérisé par la préparation ou l'emploi d'un poly(2-hydroxyéthyleméthacrylate) comme polymère biocompatible.

10. Procédé selon la revendication 7 ou 8, caractérisé par la préparation ou l'emploi d'un poly(2-hydroxyéthyleméthacrylate) réticulé comme polymère biocompatible.

11. Procédé selon une des revendications 7 à 10, caractérisé par l'emploi du 2-hydroxyéthyleméthacrylate et éventuellement l'éthylènediméthacrylate comme monomères.

12. Procédé selon une des revendications 7 à 11, caractérisé par l'emploi d'initiateurs solubles dans l'eau pour initier la polymérisation radicale.